# EUROPEAN PATENT SPECIFICATION

(11) **EP 0 990 091 B1**
(45) Date of publication and mention of the grant of the patent: **02.05.2002**
(21) Application number: 98932278.9
(22) Date of filing: 17.06.1998
(51) Int. Cl.: F02B 23/08, F02M 61/14

(54) **DIRECT INJECTION SPARK IGNITION ENGINE**
DIREKTEINGESPRITZTE, FREMDGEZÜNDETE BRENNKRAFTMASCHINE
MOTEUR A ALLUMAGE COMMANDE ET A INJECTION DIRECTE

(30) Priority: 18.06.1997 GB 9712720
(43) Date of publication of application: 05.04.2000
(73) Proprietor: Ford Global Technologies, Inc., Dearborn, Michigan 48136 (US)
(72) Inventor: MA, Thomas Tsoi Hei, Chelmsford, Essex CM3 5BY (GB)
(74) Representative: Messulam, Alec Moses
(86) International application number: GB9801777
(87) International publication number: WO9858166

(56) References cited:
- GB-A- 1 025 543
- GB-A- 2 113 297
- US-A- 4 116 191
- PATENT ABSTRACTS OF JAPAN vol. 199, no. 712 25 December 1997 & JP 09 209 761 A (MITSUBISHI MOTORS CORP) 12 August 1997

## Description

### Field of the invention

The present invention relates to a direct injection spark ignition internal combustion engine.

### Background of the invention

Modern direct injection fuel injectors operate at high fuel pressure in the order of 50 to 100 bars and produce very fine fuel droplets dispersed at high speed. Because the air drag on the droplets increases rapidly as the size of the droplets decreases, the finer droplets would have a stronger interaction with the surrounding air. As a result, these droplets are rapidly slowed down while the air is accelerated, being entrained by the ensemble of fast moving droplets.

In GB-A-1,025,543 the fuel spray from an injector enters the combustion chamber through a discharge channel. The spray has a large conical angle as compared with the length and the width of the discharge channel with the result that the fuel impinges on the walls of the discharge channel and is dispersed as a result.

### Object of the invention

The present invention seeks inject fuel directly into a combustion chamber through a connecting passage in a manner to improve the fuel preparation.

### Summary of the invention

According to the invention, there is provided a spark ignition internal combustion engine having a fuel injector mounted to inject liquid fuel as a divergent spray from a nozzle orifice into the combustion chamber of each engine cylinder, wherein the divergent spray passes through a connecting passage leading from the nozzle orifice at one end of the passage to a mouth at the other end of the connecting passage opening into the combustion chamber,
characterised in that
- the connecting passage is defined by a tube projecting forward of the nozzle orifice of the fuel injector,
- the length of the passage and the divergence angle of the fuel spray are such that fuel spray covers substantially the entire area of the mouth of the passage when fuel is being injected, so that fuel droplets spreading from the nozzle orifice of the fuel injector entrain air as they pass along the passage and maintain a lower pressure within the passage than the pressure prevailing in the combustion chamber, and
- an opening is provided in a side wall of the connecting passage between the mouth and the nozzle orifice, to draw air from the combustion chamber into the passage under the action of the low pressure created by the fuel spray.

The mouth of the passage should be designed to produce maximum air entrainment by the fuel droplets when fuel is being injected during the intake stroke. The mouth should be sufficiently broad not to restrict the desired conical angle of the fuel spray yet sufficiently narrow to avoid ambient air from the combustion chamber returning through regions of the mouth not occupied by the spray and equalising the pressures in the passage and the combustion chamber.

By creating a local low pressure region within the connecting passage by the interaction of the fuel droplets with the air in the passage, the invention increases evaporation of fuel droplets before they leave the mouth of the passage, thereby enhancing mixture preparation.

The opening in the side wall of the connecting passage between the mouth and the nozzle orifice draws air from the combustion chamber into the passage under the action of the low pressure created by the fuel spray. If the opening in the side wall of the passage is directed to introduce air tangentially into the passage, then it creates a swirling air flow along the passage which increases atomisation of the fuel spray and reduces its penetration into the combustion chamber.

The invention may be applied in any mounting position of the fuel injector in the combustion chamber, for example in the cylinder head, with the connecting passage formed in the tube projecting from the fuel injector, the tube being housed within a larger recess opening into the combustion chamber such that air may be drawn from an annular gap between the recess and the tube to swirl in the connecting passage.

Alternatively, the fuel injector may be mounted in an unswept part of the cylinder bore with the fuel spray directed upwards towards the cylinder head in the direction of the spark plug. In this case, the connecting passage may be formed in the wall of the cylinder bore and the fuel injector may be mounted some distance away from the bore wall, thus providing the advantage of reducing any interference of the injector with the top ring of the piston when the piston is near its top dead centre position or with the cylinder head gasket between the cylinder head and the cylinder block.

The above orientation of the fuel injector is described in co-pending GB Patent Application No. 9712203.0. In this earlier application filed by the present Applicants, when fuel is injected during the intake stroke and the intake valve is open, the fuel spray is aimed towards the open end of the intake port. When fuel is injected at the end of the compression stroke and the intake valve is closed, the fuel spray is aimed to bounce off the surface of the closed intake valve and to travel towards the spark plug. This permits a major portion of the fuel to be mixed thoroughly with the intake air to form a lean homogeneous main charge and a small portion of the fuel to be aimed towards the spark plug to form a locally rich ignitable kernel, the kernel subsequently burning through to consume the entire lean charge. Such an engine with local stratification produces significantly lower NOₓ emissions compared with the conventional direct injection engine where the entire charge is progressively stratified, while retaining similar fuel economy benefits. When applied to such an engine, the present invention minimises the impact of the fuel on the intake valve and reduces the risk of wetting the spark plug.

The invention will now be described further, by way of example, with reference to the accompanying drawings, in which :
Figure 1 is a schematic section through an engine cylinder fitted with a fuel injector designed to improve vaporisation of the fuel droplets,
Figure 2 is a schematic representation of a detail of an engine cylinder fitted with an alternative design of the fuel injector,
Figure 3 is a similar view to that of Figure 1 showing an alternative mounting position for the fuel injector, and
Figure 4 is a schematic representation of the spray pattern generated by the fuel injector in Figure 3 as viewed along the axis of the cylinder looking upwards towards the cylinder head.

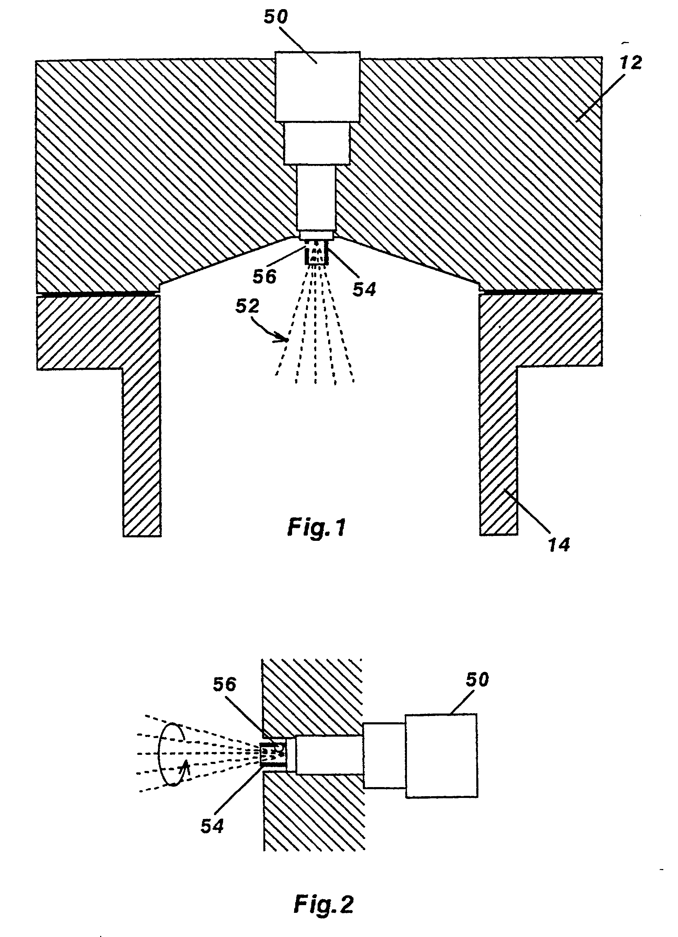

In Figure 1 there is shown an engine cylinder having a cylinder head 12 and a cylinder block 14. A fuel injector 50 is mounted in the cylinder head 12 and has at its lower end as viewed a nozzle orifice from which there is emitted a divergent fuel spray 52. A tube 54, defining a connecting passage, projects from the end of the fuel injector 50 to surround the nozzle orifice. The length of the tube 54 and its diameter are so chosen in relation to the divergence angle of the fuel spray 52 that the spray occupies the entire mouth of the tube 54 as it exits from the connecting passage in the tube 54 into the combustion chamber.

Fuel droplets in the spray entrain air with them so that air is expelled from the connecting passage with the fuel droplets. However as the entire mouth of the tube 54 is occupied by the spray, air cannot return to the connecting passage from its discharge end and this results in a lower pressure within the connecting passage than the pressure in the combustion chamber. This low pressure will result in air being drawn into the connecting passage. The opening 56 is aimed tangentially so that the air drawn into the connecting passage creates a swirl to assist in the dispersion of the fuel droplets.

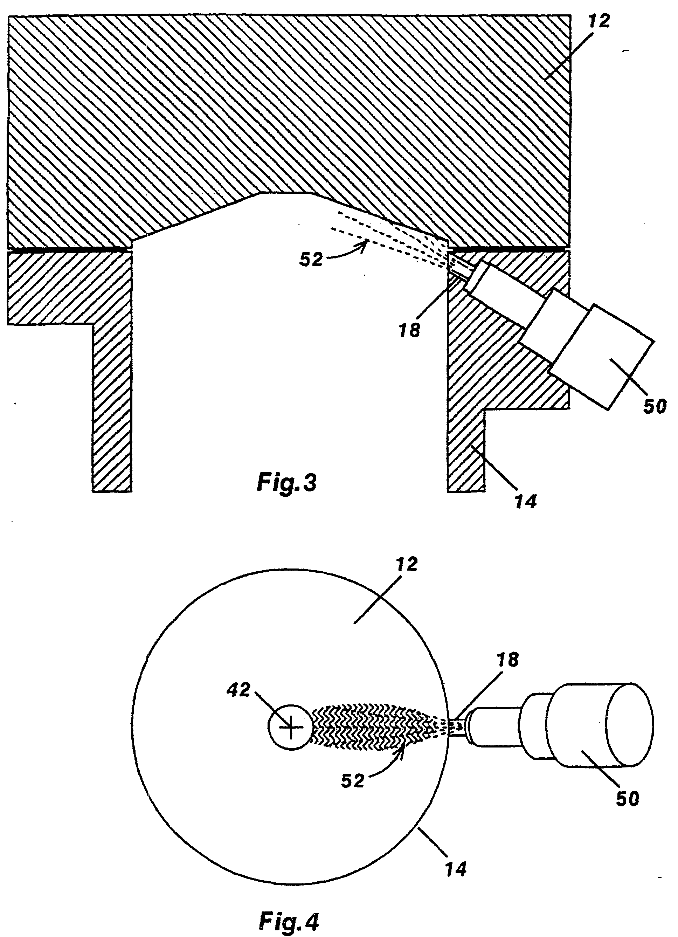

The embodiment of the invention illustrated in Figure 2 differs from that of Figure 1 in that the nozzle orifice and its surrounding tube 54 are recessed into the cylinder wall instead of projecting from it. In this case, air enters through the opening 56 via the annular gap between the tube 54 and the wall of the recess in the combustion chamber.

In the embodiment of Figure 3 and 4, the fuel injector 50 is positioned in the manner described in co-pending Patent Application No. 9712203.0. In this case the discharge tube of the fuel injector 50 is arranged in a recess 18 in an unswept part of the cylinder bore. The vaporisation of the fuel droplets follows the same principle as described with reference to Figure 1.

The direction of the fuel spray 52 is towards an intake valve (not shown) in the cylinder head 12. When this valve is open, the spray is aimed towards the open end of the intake port and this produces a generally homogeneously mixed charge. When the intake valve is closed, as shown in Figure 4, the fuel spray 52 bounces off the head of the intake valve and travels towards the spark plug 42 where it creates a local ignitable cloud.

The advantage of the invention in the context of Figures 3 and 4 is that the improved vaporisation and reduced penetration of the fuel spray 52 reduce the risk of wetting the spark plug and interfering with its proper firing.

## Claims

1. A spark ignition internal combustion engine having a fuel injector (50) mounted to inject liquid fuel as a divergent spray from a nozzle orifice into the combustion chamber of each engine cylinder, wherein the divergent spray passes through a connecting passage (18) leading from the nozzle orifice at one end of the passage to a mouth at the other end of the connecting passage (18) opening into the combustion chamber,
**characterised in that**
• the connecting passage (18) is defined by a tube projecting forward of the nozzle orifice of the fuel injector,
• the length of the passage (18) and the divergence angle of the fuel spray are such that fuel spray covers substantially the entire area of the mouth of the passage when fuel is being injected, so that fuel droplets spreading from the nozzle orifice of the fuel injector entrain air as they pass along the passage (18) and maintain a lower pressure within the passage than the pressure prevailing in the combustion chamber, and
• an opening (56) is provided in a side wall of the connecting passage between the mouth and the nozzle orifice, to draw air from the combustion chamber into the passage under the action of the low pressure created by the fuel spray.

2. A spark ignition internal combustion engine as claimed in claim 1, wherein the opening (56) in the side wall of the passage is directed to introduce air tangentially into the passage to create a swirling air flow along the passage.

3. A spark ignition internal combustion engine as claimed in claim 1 or claim 2, wherein the fuel injector (50) is positioned in an unswept part of the cylinder bore with the fuel spray pattern directed to spray fuel into an intake port when the associated intake valve is open.

## Patentansprüche

1. Fremdgezündete Brennkraftmaschine mit einer darin eingebauten Kraftstoffeinspritzdüse (50) zum Einspritzen von flüssigem Kraftstoff in Form eines divergenten Sprühstrahls von einer Düsenöffnung aus in den Brennraum jedes Motorzylinders, worin der divergente Strahl durch einen Verbindungskanal (18) strömt, der von der Düsenöffnung am einen Ende des Kanals zu einer Mündung am anderen Ende des Verbindungskanals (18) führt, die sich zur Brennkammer öffnet,
**dadurch gekennzeichnet, daß**
- der Verbindungskanal (18) von einem von der Düsenöffnung der Kraftstoffeinspritzdüse aus vorstehenden Röhrchen gebildet wird,
- die Länge des Kanals (18) und der Spreizwinkel des Kraftstoffstrahles derart gewählt sind, daß der Kraftstoffstrahl im wesentlichen die gesamte Querschnittsfläche der Mündung deckt, wenn Kraftstoff eingespritzt wird, so daß die von der Düsenöffnung der Kraftstoffeinspritzdüse ausströmenden Kraftstofftröpfchen beim Durchlaufen des Kanals (18) Luft mitreißen und so in dem Kanal einen niedrigeren Druck halten, als der im Brennraum herrschende Druck, und daß
- zwischen der Mündung und der Düsenöffnung eine Öffnung (56) in einer Seitenwand des Verbindungskanals vorgesehen ist, so daß unter der Wirkung des durch den Kraftstoffstrahl erzeugten niedrigen Druckes Luft aus dem Brennraum in den Kanal gesaugt werden kann.

2. Fremdgezündete Brennkraftmaschine nach Anspruch 1, worin die Öffnung (56) in der Seitenwand des Kanals so gerichtet ist, daß Luft tangential in den Kanal eingeleitet wird, so daß eine Luftwirbelströmung im Kanal erzeugt wird.

3. Fremdgezündete Brennkraftmaschine nach Anspruch 1 oder Anspruch 2, worin die Kraftstoffeinspritzdüse (50) in einem nicht gespülten Teil der Zylinderbohrung angeordnet ist, wobei der Sprühstrahl so gerichtet ist, daß Kraftstoff in eine Einlaßöffnung gespritzt wird, wenn das zugehörige Einlaßventil geöffnet ist.

## Revendications

1. Moteur à combustion interne à allumage par étincelle comportant un injecteur de carburant (50) monté afin d'injecter du carburant liquide sous forme d'une pulvérisation divergente à partir d'un orifice de buse dans la chambre de combustion de chaque cylindre de moteur, où la pulvérisation divergente passe à travers un passage de liaison (18) conduisant à partir de l'orifice de buse au niveau d'une première extrémité du passage à une bouche au niveau de l'autre extrémité du passage de liaison (18) s'ouvrant dans la chambre de combustion,
**caractérisé en ce que**
• le passage de liaison (18) est défini par un tube faisant saillie en avant de l'orifice de buse de l'injecteur de carburant,
• la longueur du passage (18) et l'angle de divergence de la pulvérisation de carburant sont tels que la pulvérisation de carburant couvre sensiblement la surface entière de la bouche du passage lorsque du carburant est injecté, de sorte que les gouttelettes de carburant se dispersant à partir de l'orifice de buse de l'injecteur de carburant entraînent de l'air lorsqu'elles passent le long du passage (18) et maintiennent une pression plus basse à l'intérieur du passage que la pression prédominant dans la chambre de combustion, et
• une ouverture (56) est ménagée dans une paroi latérale du passage de liaison entre la bouche et l'orifice de buse, afin d'aspirer de l'air à partir de la chambre de combustion jusque dans le passage sous l'action de la basse pression créée par la pulvérisation de carburant.

2. Moteur à combustion interne à allumage par étincelle, selon la revendication 1, dans lequel l'ouverture (56) dans la paroi latérale du passage est dirigée afin d'introduire de l'air de façon tangentielle dans le passage afin de créer un écoulement d'air tourbillonnaire le long du passage.

3. Moteur à combustion interne à allumage par étincelle selon la revendication 1 ou la revendication 2, dans lequel l'injecteur de carburant (50) est positionné dans une partie non balayée de l'alésage de cylindre avec le motif de pulvérisation de carburant dirigé afin de pulvériser du carburant dans un orifice d'admission lorsque la soupape d'admission associée est ouverte.
